# EUROPEAN PATENT SPECIFICATION

(11) **EP 1 299 879 B1**
(45) Date of publication and mention of the grant of the patent: **19.07.2006**
(21) Application number: 01930394.0
(22) Date of filing: 10.05.2001
(51) Int. Cl.: G10L 19/14, H04L 12/56

(54) **ENCODING AND DECODING OF A DIGITAL SIGNAL**
KODIERUNG UND DEKODIERUNG EINES DIGITALEN SIGNALS
CODAGE ET DECODAGE D'UN SIGNAL NUMERIQUE

(30) Priority: 10.05.2000 SE 0001728
(43) Date of publication of application: 09.04.2003
(73) Proprietor: Global IP Sound Europe AB, 116 63 Stockholm (SE); Global IP Sound Inc., San Francisco, CA 94133-5134 (US)
(72) Inventor: ABRAHAMSSON, Tina, S-177 39 Jakobsberg (SE); VANG ANDERSEN, Soren, Fredrik Bajers Vej 7-A3 DK-9220 Aalborg (DK); HAGEN, Roar, S-116 38 Stockholm (SE); KLEIJN, W., Bastiaan, S-182 75 Stocksund (SE)
(74) Representative: Henningsson, Gunnar
(86) International application number: PCT/SE2001/001022
(87) International publication number: WO 2001/086636

(56) References cited:
- GB-A- 2 323 754
- US-A- 4 992 889
- VAISHAMPAYAN V.A. ET AL.: 'Balanced interframe multiple description video compression' IMAGE PROCESSING, ICIP 99, PROCEEDINGS. 1999 INTERNAT.... vol. 3, 1999, pages 812 - 816, XP010368810
- P.A.A. ASSUNCAO ET AL.: 'Transcoding of single-layer MPEG video into lower rates' IEE PROC.-VIS. IMAGE SINGAL PROCESS vol. 144, no. 6, December 1997, pages 377 - 383, XP006009073
- WANG Y.: 'A set of transformation for lossless image compression' IEEE TRANSACTIONS ON IMAGE PROCESSING vol. 4, no. 5, May 1995, pages 677 - 679, XP000504561

## Description

### Technical field of the invention

The present invention relates to encoding of a digital signal and its blocks of digital samples for transmission over a packet switched network.

Consequently, the present invention further relates to decoding of a digital signal and its blocks of digital samples received from a packet switched network.

### Technical background and prior art

Telephony over packet switched networks, such as IP (Internet Protocol) based networks (mainly the Internet or Intranet networks) has become increasingly attractive due to a number of features. These features include such things as relatively low operating costs, easy integration of new services, and one network for voice and data. The speech or audio signal in packet switched systems is converted into a digital signal, i.e. into a bitstream, which is divided in portions of suitable size in order to be transmitted in data packets over the packet switched network from a transmitter end to a receiver end.

Packet switched networks were originally designed for transmission of non-real-time data and voice transmissions over such networks causes some problems. Data packets can be lost during transmission, as they can be deliberately discarded by the network due to congestion problems or transmission errors. In non-real-time applications this is not a problem since a lost packet can be retransmitted. However, retransmission is not a possible solution for real-time applications. A packet that arrives too late to a real-time application cannot be used to reconstruct the corresponding signal since this signal already has been, or should have been, delivered to the receiving speaker. Therefore, a packet that arrives too late is equivalent to a lost packet.

One characteristic of an IP-network is that if a packet arrives the content of it is undamaged. An IP-packet has a header which includes a CRC (Cyclic Redundancy Check) field. The CRC is used to check if the content of the packet is undamaged. If the CRC indicates an error, the packet is discarded. In other words, bit errors do not exist, only packet losses.

The main problem with lost or delayed data packets is the introduction of distortion in the reconstructed speech or audio signal. The distortion results from the fact that signal segments conveyed by lost or delayed data packets cannot be reconstructed. The speech coders in use today were originally designed for circuit switched networks with error free channels or with channels having bit-error characteristics. Therefore, a problem with these speech coders is that they do not handle packet losses very well.

Considering what has been described above as well as other particulars of a packet switched network, there are problems connected with how to provide the same quality in telephony over packet switched networks as in ordinary telephony over circuit switched networks. In order to solve these problems, the characteristics of a packet switched network have to be taken into consideration.

In order to overcome the problems associated with lost or delayed data packets during real-time transmissions, it is suitable to introduce diversity for the transmission over the packet switched network. Diversity is a method which increases robustness in transmission by spreading information in time (as in interleaving in mobile telephony) or over some physical entity (as when using multiple receiving antennas). In packet transmission, diversity is preferably introduced on a packet level by finding some way to create diversity between packets. The simplest way of creating diversity in a packet switched network is to transmit the same packet payload twice in two different packets. In this way, a lost or delayed packet will not disturb the transmission of the payload information since another packet with identical payload, most probably, will be received in due time. It is evident that transmission of information in a diversity system will require more bandwidth than transmission of information in a regular system.

Many of the diversity schemes or diversity systems in the prior art have the disadvantage that the transmission of a sound signal does not benefit from the additional bandwidth needed by the transmitted redundant information under normal operating conditions. Thus, for most of the time, when there are no packet losses or delays, the additional bandwidth will merely be used for transmission of overhead information.

Since bandwidth most often is a limited resource, it would be desirable if a transmitted sound signal somehow could benefit from the additional bandwidth required by a diversity system. Preferably, it would be desirable if the additional bandwidth could be used for improving the quality of the decoded sound signal at the receiving end.

In "Design of Multiple Description Scalar Quantizers", V. A. Vaishampayan, IEEE Transactions on Information Theory, Vol. 39, No.3, May 1993, the use of multiple descriptions in a diversity system is disclosed. The encoder sends two different descriptions of the same source signal over two different channels, and the decoder reconstructs the source signal based on information received from the channel(s) that are currently working. Thus, the quality of the reconstructed signal will be based on one description if only one channel is working. If both channels work, the reproduced source signal will be based on two descriptions and higher quality will be obtained at the receiving end. In the article, the author addresses the problem of index assignment in order to maximize the benefit of multiple descriptions in a diversity system.

In a system that transmits data over packet switched networks, one or more headers are added to each data packet. These headers contain data fields with information about the destination of the packet, the sender address, the size of the data within the packet, as well as other packet transport related data fields. The size of the headers added to the packets constitutes overhead information that must be taken into account. To keep the packet assembling delay of data packets small, the payload of the data packets have limited size. The payload is the information within a packet which is used by an application. The size of the payload, compared to the size of the actually transmitted data packet with its included overhead information, is an important measure when considering the amount of available bandwidth. A problem with transmitting several relatively small data packets, is that the size of the headers will be substantial in comparison with the size of the information which is useful for the application. In fact, the size of the headers will not seldom be greater than the size of the useful information.

To alleviate bandwidth problems, it is desirable to reduce the bit rate by suitable coding of the information to be transmitted. One scheme frequently used is to code information data using predictions of the data. These predictions are generated based on previous information data of the same information signal. However, due to the phenomenon that packets can be lost during transmission, it is not a good idea to insert dependencies between different packets. If a packet is lost and the reconstruction of a following information segment is dependent on the information contained in the lost packet, then the reconstruction of the following information segment will suffer. It is important that this type of error propagation is avoided. Therefore the ordinary way of using prediction to reduce the bit rate of a speech or audio signal is not efficient for this kind of transmission channels, since such prediction would lead to error propagation. Thus, there is a problem in how to provide prediction in a packet switched system when transmitting data packets with voice or audio signal information.

The use of prediction is a common method in speech coding to improve coding efficiency, i.e. for decreasing the bit rate. An example is the predictive coding technique for Differential PCM (DPCM) coders disclosed in "Digital Coding of Waveforms: Principles and Applications to Speech and Video", N.S. Jayant and P. Noll, Prentice Hall, ISBN 0-13-211913-7 01, 1984. The prediction of a signal sample is computed by a predictor based on a previous quantized signal sample, i.e. the prediction is backward adaptive. The computed prediction sample is then subtracted from the original sample which is to be predicted. The result of the subtraction is the error obtained when predicting the signal sample using the predictor. This resulting prediction error is then quantized and transmitted to a receiving end. At the receiver the prediction error is added to a regenerated prediction signal from a predictor corresponding to the predictor at the transmitting end. This combination of the received prediction error with a calculated prediction value will enable a reconstruction of the original signal sample at the receiver end. This kind of coding leads to bit rate savings since redundancy is removed and the prediction error signal has lower power than the original signal, so that less bits are needed for the quantization of the error signal at a given noise level.

As stated above, this kind of encoding/decoding of speech or audio over a packet switched network leads to error propagation if a packet is lost. When a packet is not received, the prediction value calculated in the decoder will be based on samples of the last packet that was received. This will result in a prediction value in the decoder that differs from the corresponding prediction value in the encoder. Thus, the received quantized prediction error will be added to the wrong prediction value in the decoder. Hence, a lost packet will lead to error propagation. If one would consider to reset the prediction state after each transmitted/received packet, there would be no error propagation. However, this would lead to a low quality of the decoded signal. The reason being that if the predictor state is set to zero, the result will be a low quality of the prediction value during encoding and, thus, the generation of a prediction error with more information content. This in turn will result in a low quality of the quantized signal with a high noise level since the quantizer is not adapted to quantize signals with such high information content.

If a diversity system is implemented based on multiple descriptions, the incorporation of prediction will face additional problems which are due to the fact that the sound signal has several representations. If the above described scheme for predictive encoding/decoding is used together with multiple description quantizers, one of two problems will be present. The problem will be dependent on how the predictors are utilized at the transmitting/receiving end.

If each of the multiple description quantizers at the receiving end were to feed independent prediction filters, the prediction value for each description would be independent of the arrival of the other multiple descriptions. However, with this solution the offset of the different encoded representations will be different between different independent predictor outputs. Thereby the regular spacing between representations from the multiple quantizers is lost, and with that the optimized improvement from receiving multiple descriptions is also lost.

Alternatively, all multiple descriptions could be constructed from the same predictor, thereby maintaining the optimized improvement from receiving multiple descriptions. However, if this prediction is from a predefined representation, e.g. a best representation obtained from a merger of all descriptions, then synchronization of the decoder with the encoder is lost if one (or more) description of the multiple descriptions is not received due to a packet loss when transmitting that description from the encoder at the transmitting end to the decoder at the receiving end.

Thus, as stated above, there is a problem in how to use prediction for reducing the bit rate of a speech or audio signal for transmission over a packet network, since a lost packet with a signal information segment negatively will affect the reconstruction of the following signal information segment.

When using multiple descriptions, the transmission of the sound signal will require more bandwidth than if a single description was used. In such a system, it would be even more interesting to use prediction in order to reduce the required bandwidth. However, as described above, there is a problem in how to implement the predictive encoding/decoding mechanism in such a system, while maintaining the basic gain of multiple description quantization.

### Summary of the invention

An object of the present invention is to overcome at least some of the above-mentioned problems of using predictive coding/decoding for reducing the bandwidth required when transmitting a digitized sound signal over a packet switched network.

According to the present invention; this object is achieved by the methods having the features as defined by the independent claims 1, 15, 29 and 30.

The present invention provides an advantageous way of encoding/decoding digital samples for transmission/reception over a packet switched network. This is performed by lossless encoding the digital samples, and lossless decoding of the corresponding code words, conditioned on generated prediction samples.

Thus, the output from the conditional lossless encoder is a function of two variables: the quantized digital sample and the prediction sample. Correspondingly, the output from the conditional lossless decoder is a function of two variables: the code word and the prediction sample.

Edge effects due to bad prediction values, e.g. if a previous packet has been lost, will be alleviated since the lossless encoding still is continuously performed with respect to the quantized digital samples of the digital signal itself. In comparison, if the lossless encoding were performed with respect to the prediction errors only, this would lead to severe edge effects. The reason for this is that a lost packet will imply that the predictor state is reset, or forced to zero, resulting in a great variance of the predictor error. Thus, signals with high information content will be present if a predictor state is forced to zero, or otherwise manipulated, in the beginning of a new block in order to avoid error propagation between different blocks of digital samples. In such a case the prediction error signal would basically be the original digital signal. However, with the solution according to the invention, this is alleviated since the lossless encoding and decoding still will be based on quantized digital signal samples and code words, respectively, conditioned by the prediction value rather than based on prediction errors only.

Thus, using the present invention, a bad prediction value will still enable a good quality of the transmitted signal sample, the trade-off lies in that the bit savings of the lossless encoding/decoding will be low.

Furthermore, the present invention enables that the predictor state, in an embodiment, may be set to zero when generating predictions samples during lossless encoding/decoding of a beginning of a block of digital samples, thus alleviating the effect that lost packets have on error propagation when using predictions in the encoding/decoding process.

During encoding, any quantization of the generated prediction samples are performed separately from the quantization of the digital samples. The predictions may then, in an embodiment, be used in the index domain in the form of quantized indices during encoding/decoding of the digital signal.

One advantage of using predictions in this way is that the predictor can be configured to operate in the same way at the receiving end as at the transmitting end, and it will not be necessary to transmit any extra prediction information to the receiving end.

According to some embodiments, predictions based on the quantized digital samples may be generated directly as quantization indices of prediction samples, or as samples which are quantized after its generation using the same set of quantization levels as used for the quantized digital samples, or a completely different set of quantization levels.

In an embodiment, the lossless encoding/decoding is conditioned by generated prediction sample by using these for selecting one out of several look-up tables with which quantized digital samples are losslessly encoded to code words, or code words are losslessly decoded to quantized digital samples.

The prediction, used to condition the lossless encoding/decoding, can be complemented by, e.g., a coarsely quantized estimate of the signal or prediction error variance, or other coarsely quantized features extracted from the past of the signal. Thus, a number of features can be extracted from the past of the signal, be coarsely quantized, and then used to condition a lossless encoder or decoder. Hence, a lossless encoder/decoder can be independently optimized and used for each possible combination of indexes from the quantization of the extracted features. Examples of useful features for the encoding of speech signals are: a quantized prediction; the quantizer index from not only one but from several previous samples in the signal; a quantized estimate of signal or prediction-error variance; an estimate for the direction of the waveform; and/or a voiced/unvoiced classification.

Some of the above features can be extracted per sample or per block of samples in the encoder and transmitted as side-information. Waveform direction is an example of such a feature suitable for transmission as side-information, e.g., by use of a high-dimensional block code. A voiced/unvoiced classification is another. The side-information results in a product code for the lossless encoding. The encoding of this product code can be made either sequentially or with analysis-by-synthesis.

However, the advantage of the bit rate reduction by lossless encoding/decoding based on predictions is less significant, and the bandwidth still a problem, if a very large overhead in the form of a header is added to the encoded information before transmission of the data packet. This problem will occur if multiple descriptions of the digital signal is used in order to obtain diversity, a problem which however is solved by the present invention.

Preferably, the encoder/decoder of the present invention is a multiple description encoder/decoder, i.e. an encoder/decoder which generates/receives at least two different descriptions of a digital signal. Thus, the multiple descriptions thereby provide multiple block descriptions for each block of digital samples.

The invention provides diversity based on multiple descriptions by transmitting/receiving different individual block descriptions of the same block of digital samples in different data packets at different time instances. This so called time diversity provided by the delay between the block descriptions is particularly advantageous when a time localized bottleneck occurs in the packet switched network, since the chance of receiving at least one of the block descriptions of a certain block increases when the different block descriptions are transmitted at different points in time in different packets. Preferably a predefined time interval between the transmissions of two individual block descriptions of the same block of digital samples is introduced.

Advantageously, block descriptions of different descriptions of the digital signal and relating to different blocks of digital samples are grouped together in the same packet. At least two consecutive blocks are represented by individual block descriptions from different descriptions of the digital signal. This is advantageous since it avoids the extra overhead required by the headers of the packets that transmit the different block descriptions for one and the same block of digital samples, while still only one block description of a specific block of digital samples is lost or delayed when a packet is lost or delayed.

Advantageously, lossless encoding/decoding is performed for each different block description individually. This will reduce the bit rate needed for the multiple descriptions that are transmitted. Furthermore, individual predictors of the same type are used for the different descriptions at the transmitting and the receiving end, respectively. This eliminates the problem of lost synchronization between an encoder and a decoder which otherwise can occur if a packet with a block description is lost when using a single predictor for the lossless encoding/decoding at the transmitting/receiving end.

The invention is suitable for a digital signal consisting of a digitized sound signal, in which case a block of digital samples corresponds to a sound segment of the digitized sound signal.

According to the invention the digital signal is optionally an n-bit PCM encoded digitized sound signal. Preferably a 64 kbit/s PCM signal in accordance with the standard G.711. The n-bit PCM encoded signal description is transcoded by a multiple description encoder to at least two descriptions using fewer than n bits for its representation, e.g. two (n-1)-bit representations, three (n-1)-bit representations or four (n-2)-bit representations. At the receiver end, a multiple description decoder transcodes the received descriptions back to a single n-bit PCM encoded sound signal. The transcoding corresponds to a translation between a code word of one description and respective code words of at least two different descriptions. By transcoding the PCM coded signal into multiple descriptions, there is no need to first decode and then recode the PCM coded signal to be able to provide multiple descriptions.

Thus, the invention enables the use of predictive coding/decoding when using multiple descriptions for transmitting a digital signal, such as a digitized sound signal, over a packet switched network.

It is to be understood that the term digital signal sample used herein is meant to be interpreted as either the actual sample or as any form of representation of the signal obtained or extracted from one or more of its samples. Also, a prediction sample is meant to be interpreted as either a prediction of an actual digital signal sample or as any form of prediction of a representation obtained or extracted from one or more of the digital signal samples. Finally, a quantization level of a digital sample is either the index or the value of a quantized digital sample.

### Brief description of the drawings

Further features and advantages of the invention will become more readily apparent from the appended claims and the following detailed description of a number of exemplifying embodiments of the invention when taken in conjunction with the accompanying drawings in which like reference characters are used for like features, and wherein:
Fig. 1 shows one exemplifying way of realizing multiple descriptions in accordance with state of the art;
Fig. 2 shows an overview of the transmitting part of a system for transmission of sound over a packet switched network;
Fig. 3 shows an overview of the receiving part of a system for transmission of sound over a packet switched network;
Figs. 4a and 4b show overviews of a Sound Encoder at the transmitting part and of a Sound Decoder at the receiving part, respectively, of a system for transmission of sound over a packet switched network in accordance with an embodiment of the present invention;
Figs. 5a and 5b show overviews of a Sound Encoder at the transmitting part and of a Sound Decoder at the receiving part, respectively, of a system for transmission of sound over a packet switched network in accordance with yet another embodiment of the present invention; and
Fig. 6 shows some of the element of the transmitting part of a system for transmission of sound over a packet switched network in accordance with a further embodiment of the present invention.

### Detailed description of preferred embodiments

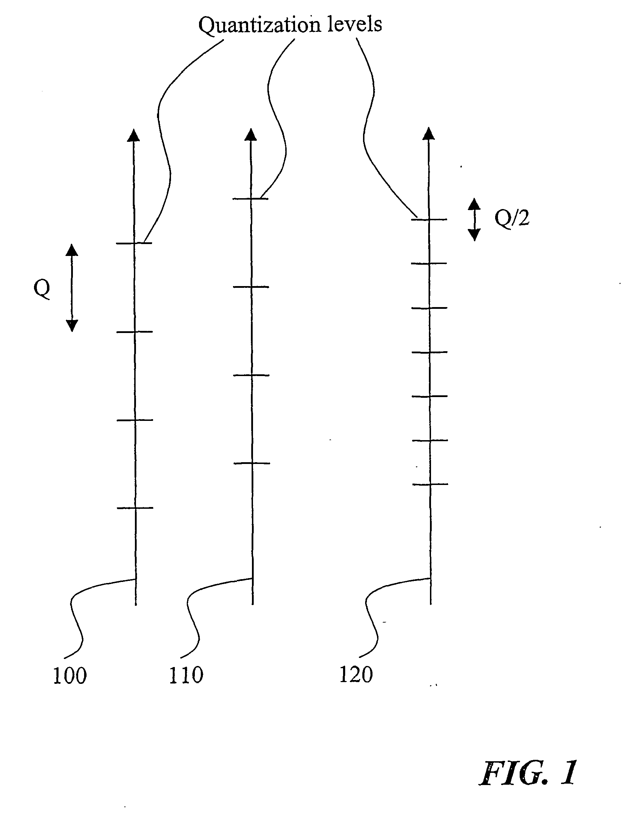

In Fig. 1, one exemplifying way of realizing multiple descriptions of a source signal, such as a sound signal, is illustrated. This approach is known in the art and is one example of multiple descriptions that can be used by the present invention. However, other suitable ways of implementing multiple descriptions may equally well be used together with the present invention. In Fig. 1 the quantization levels of two different descriptions 100, 110 from two corresponding quantizers are shown. As illustrated, both descriptions have the same quantization step size Q, but description 110 has quantization levels that are shifted with half of the quantization step size Q with respect to the quantization levels of description 100. From these two descriptions 100 and 110, a combination leads to a combined description 120 with finer quantization step size Q/2. Using the two coarse quantizers, a bit rate of 2R is required to match the performance of a single fine quantizer with bit rate R+1. For example, if each description 100 and 110 has 4 quantization levels, each will require 2 bits to code these levels, i.e. a total of 4 bits. If a finer quantizer would be used for the combined description 120, the 7 quantization levels would require 3 bits when coded. For high R, this will constitute a significant increase of the bit rate when using two coarse quantizers for providing multiple descriptions instead of one finer quantizer providing a single description.

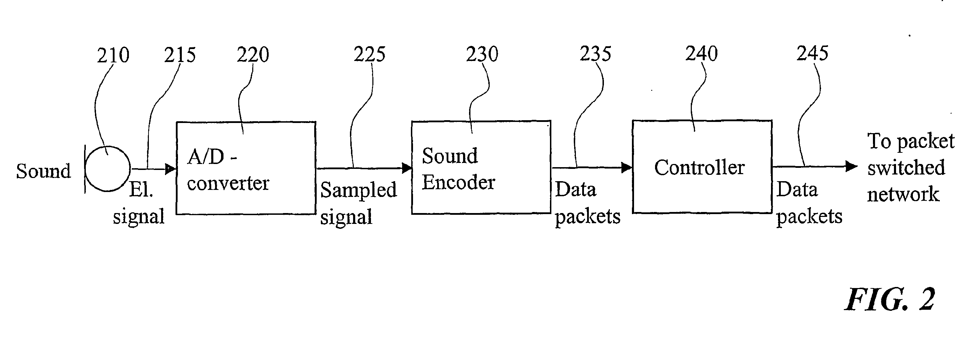

In Fig. 2 a block diagram of the transmitting part of a system for transmission of sound over a packet switched network is shown. The sound is picked up by a microphone 210 to produce an analog electric signal 215, which is sampled and quantized into digital format by an A/D converter 220. The sampling rate of the sound signal is dependent on the source of the sound signal and the desired quality. Typically, the sampling rate is 8 or 16kHz for speech signals, and up to 48kHz for audio signals. The quality of the digital signal is also affected by the accuracy of the quantizer of the A/D converter. For speech signals the accuracy is usually between 8 and 16 bits per sample. In a typical system, the transmitting end includes a Sound Encoder 230 in order to compress the sampled digital signal further. According to the present invention, an additional purpose of the Sound Encoder 230 is to modify the representation of the sound signal before transmission, with the intent to increase the robustness against packet losses and delays in the packet switched network. The sampled signal 225 is input to the Sound Encoder 230 which encodes the sampled signal and packetizes the obtained encoded signal into data packets. The data packets 235 are then transferred to a Controller 240 which adds sequencing and destination address information to the data packets, in order to make the packets suitable for transmission over a packet switched network. The data packets 245 are then transmitted over the packet switched network to a receiver end.

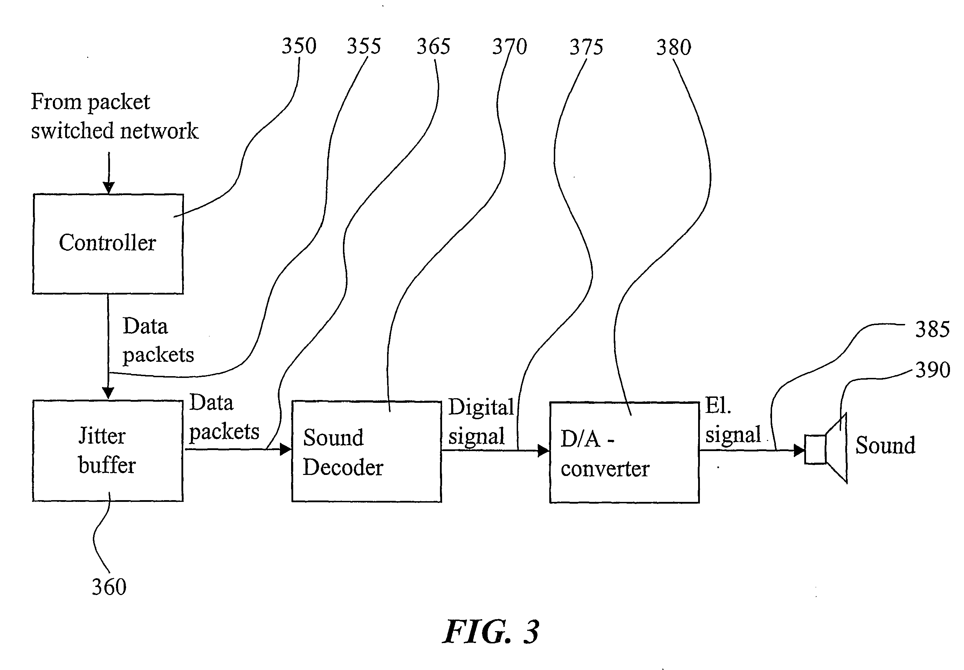

In Fig. 3 a block diagram of the receiving part of a system for transmission of sound over a packet switched network is shown. A Controller 350 receives data packets from the packet switched network, strips addressing information and places the data packets 355 in a Jitter buffer 360. The Jitter buffer 360 is a storage medium, typically RAM, which regulates the rate by which data packets 365 exit the Jitter buffer 360. The physical capacity of the jitter buffer is such that incoming data packets 355 can be stored. Data packets 365 which exit the Jitter buffer 360 are inputted to a Sound Decoder 370. The Sound Decoder 370 decodes the information in the data packets into reproduced samples of a digital sound signal. The digital signal 375 is then converted by a D/A-converter 380 into an analog electric signal 385, which analog signal drives a sound reproducing system 390, e.g. a loudspeaker, to produce sound at the receiver end.

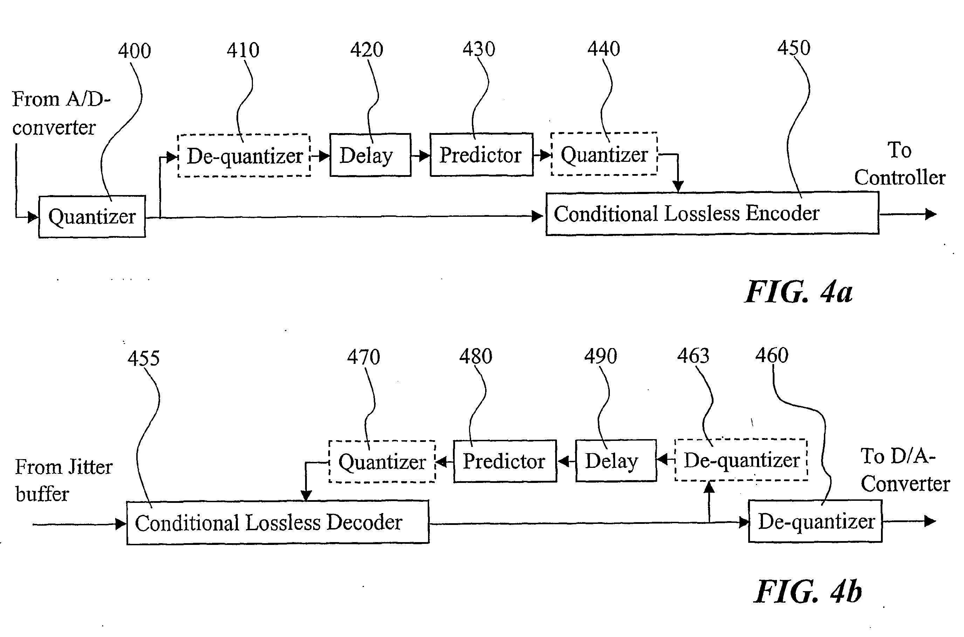

The design and operation of the Sound Encoder and the Sound Decoder, in accordance with an embodiment of the invention, will now be described in greater detail with reference to Figs 4a and 4b. Apart from what is being described below with respect to the sound encoding/decoding blocks, the overall operation correspond to that previously described with reference to Figs. 2 and 3.

In Fig. 4a, a Sound Encoder for encoding a digital signal at a transmitting end in accordance with an embodiment of the invention is shown. The Sound Encoder includes a first Quantizer 400, a De-quantizer 410, a Delay block 420, a Predictor 430, a second Quantizer 440 and a Conditional Lossless Encoder 450. The De-quantizer 410 and the second Quantizer 440 are depicted with dashed lines since they are not necessary elements of this embodiment. The use of these optional elements will be described later in an alternative embodiment.

Correspondingly, in Fig. 4b, a Sound Decoder for decoding a digital signal at a receiving end in accordance with an embodiment of the invention is shown. The Sound Decoder includes a Conditional Lossless Decoder 455, a Quantizer 470, a Predictor 480, a Delay block 490 and De-quantizers 460 and 463. The Quantizer 470 and the De-quantizer 463 are depicted with dashed lines since they are not necessary elements of this embodiment. The use of these optional elements will be described later in an alternative embodiment.

The purpose of performing lossless encoding/decoding by means of the Conditional Lossless Encoder 450 and the Conditional Lossless Decoder 455 is to find a less bit-consuming way to describe the data that is transmitted from the transmitting end to the receiving end without loosing any information. Lossless encoding uses statistical information about the input signal to reduce the average bit rate. This is, e.g., performed in such way that the code words are ordered in a table after how often they occur in the input signal. The most common code words are then represented with fewer bits than the rest of the code words. An example of a Lossless Encoder known in the art that uses this idea is the Huffman coder.

Lossless encoding only works well in networks without bit errors in the received data. The code words used in connection with lossless encoding are of different length, and if a bit error occurs it is not possible to know when a code word ends and a new begin. Thus, a single bit error does not only introduce an error in the decoding of the current code word, but in the whole block of data. When the packet switched network is an IP (Internet Protocol)-network, all damaged data packets are automatically discarded. Thus, in such a packet switched network there will be no bit errors in data packets received at the receiver end. Therefore, lossless encoding, such as scalar or block Huffman coding, are according to the invention suitable for use for independent compression of each of the coded blocks of digital samples which blocks together constitutes the digital signal.

The Conditional Lossless Encoder 450 and the Conditional Lossless Decoder 455 of the embodiment of Figs. 4a and 4b both includes tables which are created to include all possible code words and their bit representation. Table look-ups are performed to losslessly encode a block of digital samples quantized by the Quantizer 400 before being transmitted as code words over the packet network. Correspondingly, at the receiver end, the code words of an encoded block of quantized digital samples are losslessly decoded to quantized digital samples which then are de-quantized by De-quantizer 460 to a reconstructed original block of digital samples.

In Fig. 4a digital samples of a digital signal received from the A/D-converter are quantized by quantizer 400 into quantized digital samples. For each quantized digital sample a prediction sample is generated by Predictor 430 based on one or more previously quantized digital samples. The predictor 430 generates for the prediction sample, possibly a quantization index thereof, based on the quantization levels, i.e. quantization indices or quantization values, for these previous, quantized digital samples, which levels have been outputted by the Quantizer 400 and delayed by the Delay block 420. The prediction sample, or its quantization index, is used for selecting one out of several look-up tables with code words within the Conditional Lossless Encoder 450. The quantized level, such as the index, of the current quantized digital sample from Quantizer 400 is used to select a specific entry of the selected look-up table. The Conditional Lossless Encoder will then output a code word corresponding to this specific entry of the selected table.

The code words of a complete encoded block of quantized digital samples are eventually assembled to a separate packet which is transferred to a Controller. Alternatively, each code word of an encoded block is collected by the Controller and then assembled to a separate packet for the encoded block. The Controller adds header information before transmitting the data packet over a packet switched network.

In Fig. 4b the Sound Decoder corresponding to the embodiment of Fig. 4a is shown. Packets with code words, or code words of disassembled packets, are received from a Jitter buffer by the Conditional Lossless Decoder 455. For each quantized digital sample a prediction sample is generated by Predictor 480 based on one or more previous, quantized digital samples. Predictor 480 at the receiving end is configured to operate in the same way as Predictor 430 at the transmitting end. The configuration of these predictors is typically such that the predictor state is zero, or close to zero, when generating prediction samples corresponding to the initial quantized digital samples of a digital signal. In the same way as at the transmitting end, predictor 480 may generate a quantization index of a predictor sample based on the quantization levels, i.e. quantization indices or quantization values, of previous, quantized digital samples, which levels implicitly have been outputted by the Lossless Decoder 455 and delayed by the Delay block 490. The generated prediction sample at the receiving end is used for selecting a look-up table, out of several tables, within the Conditional Lossless Decoder 455. A code word received from the Jitter buffer is used to address a specific entry of the selected table, after which a corresponding quantized digital sample is outputted for de-quantization by a De-quantizer 460, after which the digital sample is transferred to a D/A-converter.

In alternative embodiments, the Sound Encoder includes the De-quantizer 410 and/or the second Quantizer 440 as depicted in Fig. 4a. Correspondingly, the Sound Decoder in accordance with these alternative embodiments includes the Quantizer 470 and/or the De-quantizer 463.

Using De-quantizers 410 and 463 quantization values of quantized digital samples will be inputted to the Predictor 430 and 480 rather than quantization indices and the Predictors will generate prediction samples based on values rather than indices.

If the Predictors 430 and 480 do not include quantization tables for outputting quantization levels, such as indices, of the generated prediction samples, should that be desired, the Sound Encoder/Decoder will include Quantizers 440, 470 for providing quantization levels, e.g. indices, of the generated prediction samples. Thus, using the Quantizers 440 and 470 it may be ascertained that the quantization levels of the generated prediction samples will be valid levels belonging to a predefined set of levels, and not levels falling between different valid quantization levels.

According to the invention, in order to avoid error propagation, a generated prediction sample corresponding to a digital sample of one block of digital samples should not be based on digital samples of a previous block. In accordance with an embodiment, this is achieved by setting a predictor state of Predictor 430 to zero before a new block with quantized digital samples is encoded. Correspondingly, in the Sound Decoder at the receiving end, the predictor state of Predictor 480 is set to zero before decoding a new block with quantized digital samples. As an alternative to setting the predictor state to zero, state information can be included in each block of digital samples, or, the encoding/decoding can follow a scheme which uses no or little state information when encoding/decoding the beginning of a block.

Thus, the Sound Encoder/Decoder of the present invention is designed to reduce the bit rate needed when transmitting a digital signal over a packet switched network. The block of digital samples on which the Sound Encoder/Decoder operates on are preferably sound segments with digitized sound samples.

The present invention is not optimized for any specific kind of predictor. However, for sound signals one choice of predictor is the one obtained by LPC analysis of the quantized signal, eventually refined with a long-term predictor as is well known for a person skilled in the art. Also non-linear predictors, such as the one defined by the oscillator model disclosed in "Time-Scale Modification of Speech Based on a Non-linear Oscillator Model", G. Kubin and W. B. Kleijn, in Proc. *Int. Conf*. *Acoust. Speech Sign. Process.,* (Adelaide), pp. I453-I456, 1994, can be used in the encoding/decoding scheme of the present invention.

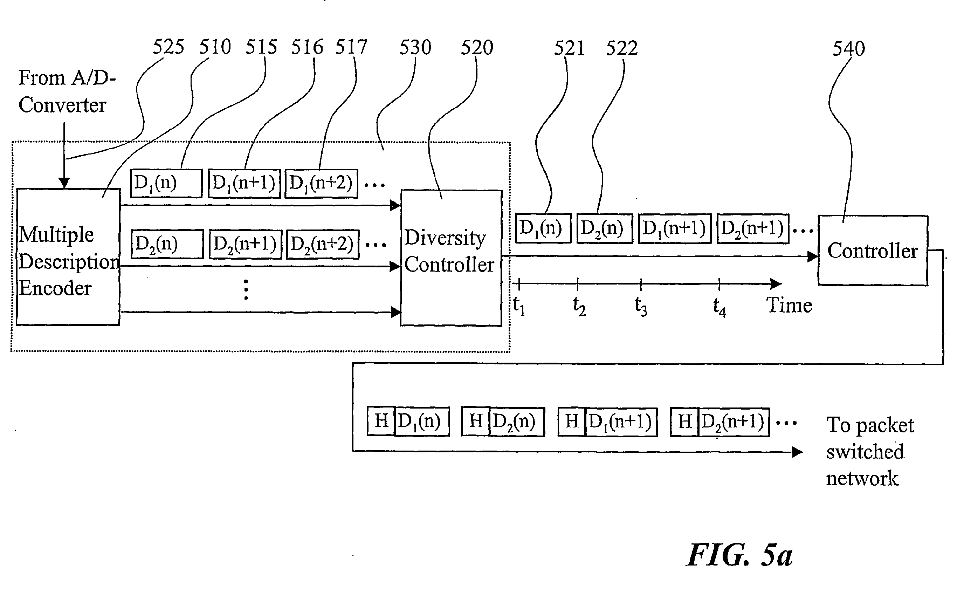

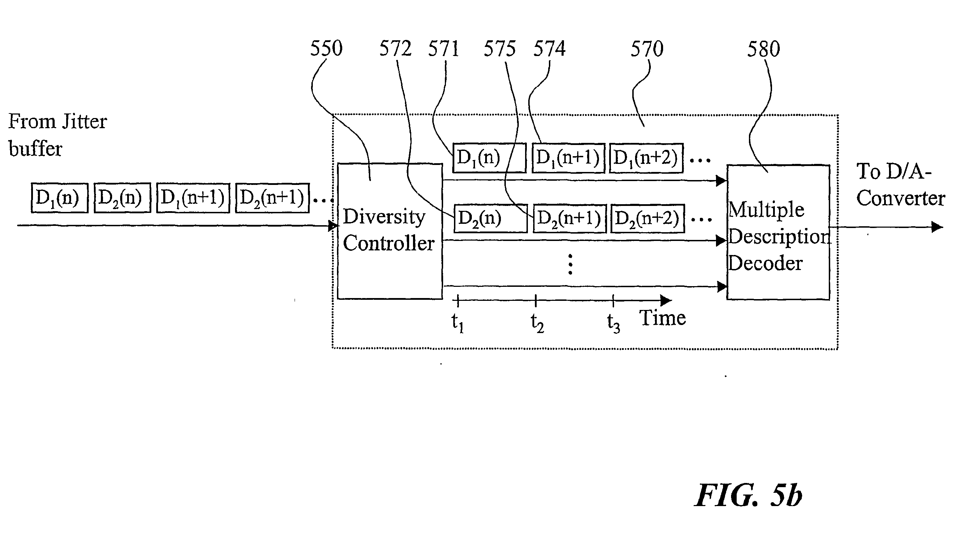

According to the invention the Sound Encoder/Decoder is further designed to increase the robustness against packet losses and delays in the packet switched network. This design to increase the robustness relies on representing the sound signal, or any digital signal in the general case, with multiple descriptions. This design is illustrated in Figs. 5a and 5b in accordance with an embodiment of the invention. Apart from what is being described below with respect to the sound encoding/decoding blocks, the overall operation correspond to that previously described with reference to Figs. 2 and 3.

In Fig. 5a, the Sound Encoder 530 at the transmitting end includes a Multiple Description Encoder 510 and a Diversity Controller 520. Correspondingly, the Sound Decoder 570 of Fig. 5b at the receiving end includes a Diversity Controller 550 and a Multiple Description Decoder 580.

Turning now to Fig. 5a, the Multiple Description Encoder 510 of the Sound Encoder 530 encodes a sampled sound signal 525 in two different ways, thereby obtaining two different bitstream representations, i.e. two different descriptions, of the sound signal. As previously described, each description has its own set of quantization levels, achieved, e.g., by shifting the quantization levels of one description with half a quantization step. Correspondingly, if three descriptions were to be provided, the quantization levels of the second description would be shifted with a third step with respect to the first description, and the third description with a third step with respect to the second description. Thus, as indicated in Fig. 5a, the sound signal may be encoded using more than two descriptions without departing from the scope of the present invention. However, for ease of description, only two signal descriptions will be used in the herein disclosed embodiments of the invention.

Each description provides a segment description of an encoded sound signal segment of the sound signal. The Multiple Description Encoder 510 generates each description and its segment descriptions by conditional lossless encoding of the digitized sound samples in accordance with what has previously been described with reference to Fig. 4a. Thus, a respective set of all the elements shown in Fig. 4a will be present in a Multiple Description Encoder 410 referred to by Fig. 5a for each generated description. Correspondingly, a respective set of all the elements shown in Fig. 4b will be present for each description used in a Multiple Description Decoder referred to by Fig. 4b.

In Fig. 5a, the different segment descriptions of the same sound segment are transferred in respective packets to the Diversity Controller 520. In Fig. 5a, two descriptions have been indicated, D₁ and D₂. The consecutive segments n, n+1, n+2, and so on, are represented by description D₁ as segment descriptions D₁(n), D₁(n+1), D₁(n+2) ..., which segment descriptions are transferred in respective consecutive data packets 515, 516, 517 from the Multiple Description Encoder 510 to the Diversity Controller 520. Correspondingly, the same segments are also represented as segment descriptions D₂(n), D₂(n+1), D₂(n+2) ...by description D₂ and are also transferred in respective data packets to the Diversity Controller. Thus, each sound segment of the sound signal 625 is represented by one segment description of each description, e.g. in Fig. 5a sound segment n+1 is represented by segment description D₁ (n+1) of description D₁ and by segment description D₂ (n+1) of description D₂.

The Diversity Controller 520 dispatches the packets received from the Multiple Description Encoder 510 in accordance with the diversity scheme used. In Fig. 5a the Diversity Controller 520 sequences each segment description of one sound segment in separate packets. The packets containing different segment descriptions of the same sound segment are transferred to the Controller 540 at different time instances. For example, as indicated in Fig. 5a, the two segment descriptions D₁(n) and D₂(n) of sound segment n is delivered to the Controller 540 in separate packets 521 and 522 at different points of time *t*₁ and *t*₂. Thus, a delay of *t*₂*-t*₁ is introduced to create time diversity. A typical delay *t*₂-*t*₁ that could be used, in connection with typical sound segment lengths of 20 ms, is 10 ms. Upon reception of a packet from the Diversity Controller 520, the Controller 540 formats the packet, such as adding sequencing and destination address information, for immediate transmission on the packet switched network. Thus, the Controller 540 adds a header, H, with information to each packet. In the case of IPv4 transport using UDP (User Datagram Protocol) and RTP (Real Time Protocol), the header size is 320 bits. For a typical speech segment length of 20 ms, this leads to 320 bits per 20 ms, i.e. to 16 kbit/s for the headers of each description used. If each speech segment is represented by two segment descriptions, the headers of the packets transferring the segment descriptions will together require a bit rate of 2*16 = 32 kbit/s. This can be compared to the bit rate of 64 kbit/s for standard PCM (Pulse Code Modulated) telephony. Consequently, the overhead bit rate will be 50% (32 divided with 64) of the payload rate.

As previously described with reference to Fig. 3, packets are received at the receiver end by a Controller 350. The Controller removes header information and transfers the packets to the Jitter buffer 360, which in turn transfers the packets to the Sound Decoder 370. Turning now to Fig. 5b, the Diversity Controller 550 of the Sound Decoder 570 receives the packets with the different segment descriptions from a jitter buffer. The Diversity Controller then schedules the different segment descriptions of the same sound segment for transfer to the Multiple Description Decoder 580 at the same time. Thus, as illustrated in the Fig. 5b, the Multiple Description Decoder 580 will e.g. receive both packets 571 and 572 with respective segment descriptions D₁(n) and D₂(n) of sound segment n at the same time, and then both packets 574 and 575 with respective segment descriptions D₁(n+1) and D₂(n+1) of sound segment n+1, and so on. The Multiple Description Decoder 580 will for each sound segment extract the joint information from the different packets and decode the sound signal segment for transfer to a D/A-converter. If, e.g., segment description D₁(n) did not arrive at the receiver end, or arrived too late, the Diversity Controller 550 will only schedule D₂(n) (if two descriptions are used) to the Multiple Description Decoder 580, which then will decode sound segment n of the sound signal with adequate quality from the single segment description D₂(n) received.

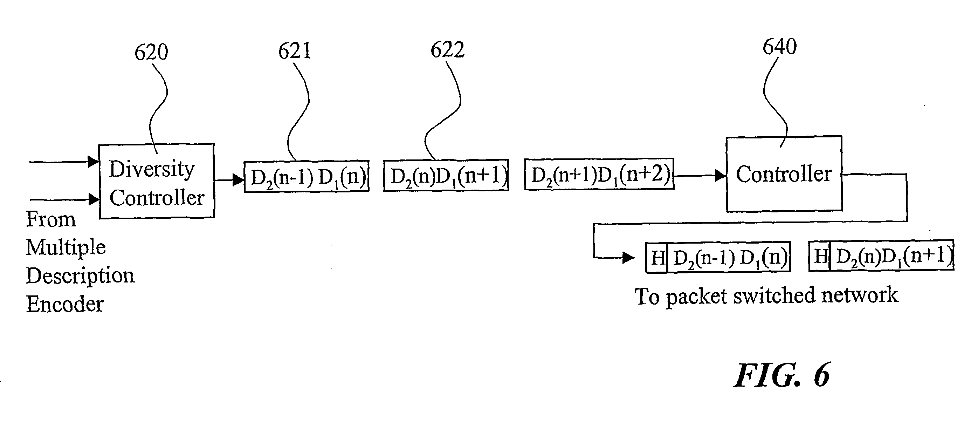

In Fig. 6 another embodiment of the present invention is shown. This embodiment differs from the one previously described with reference to Figs. 5a and 5b with respect to the organization of segment descriptions in the packets transmitted by the packet switched network. Thus, the difference lies in the packet assembling/disassembling performed at the transmitting/receiving end by the Diversity Controller of the Sound Encoder/Decoder. This difference will now be described below.

As described with reference to Figs. 5a and 5b, the overhead resulting from the headers of the different packets transferring different segment descriptions of the same sound segment is quite extensive. To alleviate this, segment descriptions of different descriptions and relating to different sound segments are grouped together in the same packet before transmission of the packet over the packet switched network. As shown in Fig. 6 the Diversity Controller 620 of the Sound Encoder at the transmitting end groups two individual segment descriptions of two consecutive sound segments together in each packet. The two segment descriptions of a packet belong to respective descriptions of the sound signal. For example, one packet will contain segment description D₂(n-1) of sound segment n-1 and segment description D₁(n) of sound segment n. The Controller 640 will as previously described add header information to each packet before transmitting the packet including the two segment descriptions over the packet switched network.

Thus, just as in the embodiment of Fig. 5, the Diversity Controller 620 of this embodiment will sequence each segment description of a sound segment in separate packets, and, as in the embodiment of Fig. 5, the packets containing different segment descriptions of the same sound segment will be transferred to the Controller 640 at different time instances. In Fig. 6, the two segment descriptions D₂(n) and D₁(n+1) of sound segment n and n+1 are delivered to the Controller 640 in packet 622. Thus, segment n+1 must have been encoded before segment description D₂(n) can be transferred to the controller. Segment description D₁(n) on the other hand was transferred in a previous packet 621 to the controller. If a sound segment is 20 ms, the transfer of D₂(n) must be delayed with 20 ms compared with the transfer of D₁(n) since D₂ (n) is to be scheduled in the same packet 622 as D₁(n+1). Thus, this scheme will automatically provide time diversity since different segment descriptions of the same sound segment will be transferred to the Controller 640 with a 20 ms interval (given a sound segment length of 20 ms). Thus, in comparison with the embodiment of Fig. 5, an additional delay between the two segment descriptions of the same sound segment is automatically introduced with this scheme of assembling packets with several segment descriptions. This additional delay between segment descriptions provides an additional time diversity advantage and can be compensated for later in the transmission chain, e.g. by having lower delay settings in the jitter buffer at the receiving end.

Moreover, the amount of payload data in one packet according to this embodiment corresponds to the total amount of data generated from one sound segment, therefore, the overhead information is not increased when creating time diversity with this scheme.

In correspondence with what has been described above, the Diversity Controller at the receiver end in this embodiment will divide the received packets in their segment description parts before transferring the segment descriptions to the Multiple Description Decoder, in correspondence with what has been shown in Fig. 5b.

The effect of the time diversity scheme referred to by Fig. 6 is again that if one packet is lost or delayed during transmission over the packet switched network, descriptions of all sound segments will still be available at the receiver end and no sound segment loss will be perceived.

According to an embodiment of the invention the Sound Encoder/Decoder encodes/decodes PCM indices of a standard 64 kbit/s PCM bitstream. This embodiment is for ease of description described by again referring to Figs 4a and 4b. As previously described the elements in respective Figs. 4a and 4b are present for each description generated/decoded by the Sound Encoder/Decoder. However, the Quantizer 400 of Fig. 4a and De-quantizer 460 of Fig. 4b are exchanged with a respective Transcoder to be described below. Furthermore, in case the digital signal is not already a PCM encoded signal, the Sound Encoder includes a PCM Encoder prior to its Transcoder and the Sound Decoder includes a PCM Decoder after its Transcoder. In this embodiment, the Sound Encoder again includes a Multiple Description Encoder feeding a Diversity Controller with multiple descriptions of one and the same sound segment. Correspondingly, the Sound Decoder includes a Multiple Description Decoder receiving multiple descriptions of one and the same sound segment from a Diversity Controller at the receiving end.

The Multiple Description Encoder of the Sound Encoder consists of an ordinary PCM Encoder followed by a Transcoder. Thus, the digital signal received by the Sound Encoder from the A/D converter is encoded using an ordinary PCM Encoder. The obtained PCM bitstream is then transcoded, i.e. translated, into several bitstreams by the Transcoder, after which each bitstream gives a coarse representation of the PCM signal. The corresponding Multiple Description Decoder at the receiving end includes a Transcoder for transcoding received multiple bitstream descriptions to a single PCM bitstream. This PCM bitstream is then decoded by an ordinary PCM Decoder before being transferred to a D/A-converter. The method of transcoding, or translating is exemplified below where one 64 kbit/s PCM bitstream is transcoded into two bitstreams which provide multiple descriptions of the PCM signal.

A standard 64 kbit/s PCM Encoder using *µ*-law log compression encodes the samples using 8 bits/sample. This gives 256 different code words, but the quantizer only consists of 255 different levels. The zero-level is represented by two different code words to simplify the implementation in hardware. According to the embodiment, each quantization level is represented by an integer index, starting with zero for the most negative level and up to 254 for the highest level. The first of the two bitstreams is achieved by removing the least significant bit of each of the integer indices. This new index represents a quantization level in the first of the two coarse quantizers. The second bitstream is achieved by adding one to each index before removing the least significant bit. Thus, two 7-bit representations are achieved from the original 8-bit PCM representation. Decoding of the two representations can either be performed on each individual representation, in case of packet loss, or on the two representations in which case the original PCM signal is reconstructed. The decoding is simply a transcoding back into the PCM indices, followed by table look-up.

Alternatively, the PCM Encoder is a standard 64 kbit/s PCM Encoder using A-law log compression. In this case the number of levels in the quantizer is 256, which is one more than in a µ-law coder. To represent these 256 levels using two new quantization grids, and be able to fully reconstruct the signal, one grid with 128 levels and one with 129 levels is needed. It would be desired to use two 7-bit grids like in the µ-law case, however the problem with the extra quantization level has to be solved. According to the invention each quantization level is represented by an integer index, starting with zero for the most negative level and up to 255 for the highest level. The exact same rule as in the µ-law case is used to form the new indices, except when representing index number 255. The index number 255 is represented with index number 126 for the first quantizer and index number 127 for the second instead of 128 and 127, which would be obtained if the rule would be followed. The decoder has to check this index representation when transcoding the two bitstreams into the A-law PCM bitstream. If only the first of the two descriptions is received after transmission, and the 255^{th} index was encoded, the decoder will introduce a quantization error that is a little higher than for the other indices.

An encoded PCM signal includes a high degree of redundancy. Therefore, it is particularly advantageous to combine the use of PCM signals with lossless encoding/decoding of the multiple descriptions derived from a PCM signal.

If the digital signal received by the Sound Encoder already is represented as a 64 kbit/s PCM bitstream, and if the Sound Decoder at the receiving part should output a 64 kbit/s PCM bitstream, the PCM Encoder at the transmitting part and the PCM Decoder at the receiving part will not be needed. In this case the Multiple Description Encoder of the present invention receives the PCM bitstream and converts the PCM indices to the 0 to 254 representation described above. This representation is fed directly to the Transcoder, which transcodes the bitstream into two new bitstreams using the simple rules given above. At the receiver end of the system the information in the received packets are collected by the Diversity Controller. If all packets arrive the Transcoder merges and translates the information from the multiple descriptions back into the original PCM bitstream. If some packets are lost the original bitstream cannot be exactly reconstructed, but a good approximation is obtained from the descriptions that did arrive.

Although the invention has been described above by way of example with reference to different embodiments thereof, it will be appreciated that various modifications and changes can be made without departing from the scope of the invention as defined in the appended claims.

## Claims

1. A method of encoding a digital signal and its blocks of digital samples for transmission over a packet switched network, the method including the steps of:
quantizing the binary representations of the digital samples to more coarsely representations of the digital samples;
generating prediction samples as fixed point or floating point representations based on previous, quantized digital samples of said quantizing step; and
lossless encoding the quantized digital samples conditioned on the fixed point or floating point representations of the generated prediction samples.

2. The method as claimed in claim 1, wherein the lossless encoding of the quantized digital samples is based on table look-ups.

3. The method as claimed in claim 2, wherein table look-ups are performed by means of a quantized digital sample for generating two quantization region boundary levels corresponding to the quantized digital sample, wherein the levels by means of the common generated prediction value and another table are mapped onto a pair of likelihood values that are used for lossless encoding the quantized digital sample.

4. The method as claimed in claim 1 or 2, wherein said lossless encoding step for a specific quantized digital sample includes outputting a specific code word which corresponds to a specific entry of a table with code words, said specific entry being derived by means of the generated prediction sample corresponding to said specific quantized digital sample.

5. The method as claimed in claim 4, wherein said table with code words is chosen among several tables with code words based upon said generated prediction sample, wherein said specific entry is derived as the entry corresponding to said quantization index of said quantized digital sample.

6. The method as claimed in any one of claims 1 - 5, wherein said step of generating prediction samples is preceded by de-quantization of the quantized digital samples, thereby obtaining the quantization values of said quantized digital samples.

7. The method as claimed in any one of claims 1 - 6, including the step of quantizing the generated prediction samples, wherein said lossless encoding step is based on generated prediction samples having quantization levels of a predefined set of quantization levels.

8. The method as claimed in any one of claims 1 - 7, including the step of setting a state of a predictor generating said prediction samples to zero before starting to encode one of said blocks with digital samples.

9. The method as claimed in claim 7 or 8, wherein said lossless encoding step is conditioned on the quantization indices of said generated prediction samples.

10. The method as claimed in any one of claims 1 - 9, wherein said encoding is performed by a multiple description encoder, which multiple description encoder encodes each block of said blocks of digital samples by means of multiple block descriptions by performing the steps of the encoding method individually for each generated block description.

11. The method as claimed in claim 10, including the additional step of transmitting, for each block of said blocks of digital samples, at least two different block descriptions in respective data packets with a predefined time interval between the packets.

12. The method as claimed in claim 11, including grouping a respective block description of at least two different blocks of digital samples together for transmission in one and the same data packet.

13. The method as claimed in any one of claims 10 - 12, wherein said digital signal is a digitized sound signal and said blocks of digital samples are sound segments, and wherein the encoding method in said multiple description encoder includes an initial step of transcoding an n-bit PCM represented digitized sound signal to at least two representations represented by fewer than n bits each and with respective sets of quantization levels for the segment descriptions of the sound segments of said digitized sound signal.

14. The method as claimed in any one of claims 1 - 12, wherein said digital signal is a digitized sound signal and said blocks of digital samples are sound segments.

15. A method of decoding a digital signal and its blocks of digital samples received from a packet switched network, the method including the steps of:
generating prediction samples as fixed point or floating point representations based on previous, quantized digital samples of said digital signal resulting from a lossless decoding of received code words;
lossless decoding received code words conditioned on the fixed point or floating point representations of the generated prediction samples; and
de-quantizing quantized digital samples resulting from the lossless decoding step into binary representations of the digital samples of said digital signal.

16. The method as claimed in claim 15, wherein the lossless decoding of the received code words is based on table look-ups.

17. The method as claimed in claim 16, wherein the received code words represents likelihood values, wherein two likelihood values by means of a generated prediction value and a table are mapped onto two quantization region boundary levels of a corresponding quantized digital sample, said levels being used to derive the corresponding quantized digital sample by performing table look-ups.

18. The method as claimed in claim 15 or 16, wherein said lossless decoding step for a specific quantized digital sample includes outputting a specific quantization level which corresponds to a specific entry of a table with quantization levels, said specific entry being selected by means of a received code word corresponding to said specific quantized digital sample.

19. The method as claimed in claim 18, wherein said table with quantization levels is chosen among several tables with quantization levels based upon a generated prediction sample corresponding to said specific quantized digital sample.

20. The method as claimed in any one of claims 15 - 19, wherein said step of generating prediction samples is preceded by de-quantization of the quantized digital samples resulting from the lossless decoding step, thereby obtaining the quantization values of said quantized digital samples.

21. The method as claimed in any one of claims 15 - 20, including the step of quantizing the generated prediction samples, wherein said lossless decoding step is based on generated prediction samples having quantization levels of a predefined set of quantization levels.

22. The method as claimed in any one of claims 15 - 21, including the step of setting a state of a predictor generating said prediction samples to zero before starting to decode one of said blocks with digital samples.

23. The method as claimed in claim 21 or 22, wherein said lossless decoding step is conditioned on the quantization indices of said generated prediction samples.

24. The method as claimed in any one of claims 15 - 23, wherein said decoding is performed by a multiple description decoder, which multiple description decoder decodes each block of said blocks of digital samples based on at least two different received block descriptions by performing the steps of the decoding method preceding the de-quantizing step individually for each received block description.

25. The method as claimed in any one of claims 15 - 24, including the steps of:
waiting a predefined time period for reception of at least two different packets including different block descriptions of one and the same block of digital samples;
performing the steps of the decoding method preceding the de-quantizing step with respect to those, one or several, different block descriptions of said block of digital samples received within said predefined time period; and
de-quantizing the one, or a merger of the several, block descriptions.

26. The method as claimed in claim 25, wherein each received packet includes several block descriptions of several different blocks of digital samples grouped together, the method including the step of dividing successively received packets with respect to the included block descriptions, thereby obtaining several different block descriptions for each block of digital samples to be decoded.

27. The method as claimed in any one of claims 25 - 26, wherein said digital signal is a digitized sound signal and said blocks of digital samples are sound segments, and wherein said digitized sound signal is a PCM encoded bitstream, and wherein any merger of said de-quantizing step involves transcoding at least two segment representations, each represented by fewer than n bits, to a single n-bit PCM representation of said one and the same sound signal segment.

28. The method as claimed in any one of claims 15 - 26, wherein said digital signal is a digitized sound signal and said blocks of digital samples are sound segments.

29. A computer readable medium having computer executable instructions for carrying out each of the steps of the method as claimed in any one of claims 1 - 14 when run on a computer.

30. A computer readable medium having computer executable instructions for carrying out each of the steps the method as claimed in any one of claims 15 - 28 when run on a computer.

## Patentansprüche

1. Verfahren zum Kodieren eine digitalen Signals und seiner Blöcke digitaler Tastwerte für die Sendung über ein Paket-geschaltetes Netz, umfassend die Schritte:
Quantisieren der binären Darstellungen der digitalen Tastwerte in gröbere Darstellungen der digitalen Tastwerte;
Erzeugen von Vorhersagetastwerten als Festpunkt- oder Gleitpunkt-Darstellungen auf der Grundlage früherer, quantisierter digitaler Tastwerte des Quantisierungsschritts; und
verlustloses Kodieren der durch die Festpunkt- oder Gleitpunkt-Darstellung der erzeugten Vorhersagetastwerte bedingten quantisierten, digitalen Tastwerte.

2. Verfahren nach Anspruch 1, bei dem das verlustlose Kodieren der quantisierten digitalen Tastwerte auf Tabellennachschlag basiert.

3. Verfahren nach Anspruch 2, bei dem das Tabellennachschlagen mittels eines quantisierten digitalen Tastwertes ausgeführt wird für die Erzeugung zweier Quantisierungsbereichsgrenzpegel entsprechend dem quantisierten digitalen Tastwert, wobei die Pegel mittels des gemeinsamen erzeugten Vorhersagewertes und einer weiteren Tabelle auf ein Paar Wahrscheinlichkeitswerte abgebildet werden, die für das verlustlose Kodieren des quantisierten digitalen Tastwertes verwendet werden,

4. Verfahren nach Anspruch 1 oder 2, bei dem der Schritt des verlustlosen Kodierens für einen spezifischen quantisierten digitalen Tastwert das Ausgeben eines spezifischen Kodeworts enthält, das einem spezifischen Eintrag einer Tabelle mit Kodewörtern entspricht, wobei der spezifische Eintrag mittels des erzeugten Vorhersagetastwerts abgeleitet wird, der dem spezifischen quantisierten Tastwert entspricht.

5. Verfahren nach Anspruch 4, bei dem die Tabelle mit Kodewörtern unter mehreren Tabellen mit Kodewörtern ausgewählt wird auf der Grundlage des erzeugten Vorhersagetastwertes, wobei der spezifische Eintrag als der Eintrag abgeleitet wird, der dem Quantisierungsindex des quantisierten digitalen Tastwerts entspricht.

6. Verfahren nach einem der Ansprüche 1 bis 5, bei dem dem Schritt des Erzeugens von Vorhersagetastwerten eine Entquantisierung der quantisierten digitalen Tastwerte vorangeht, um **dadurch** die Quantisierungswerte der quantisierten digitalen Tastwerte zu erhalten.

7. Verfahren nach einem der Ansprüche 1 bis 6, enthaltend den Schritt des Quantisierens der erzeugten Vorhersagetastwerte, wobei der Schritt des verlustlosen Kodierens auf erzeugten Vorhersagetastwerten basiert, die Quantisierungspegel eines vorbestimmten Satzes Quantisierungspegel haben.

8. Verfahren nach einem der Ansprüche 1 bis 7, enthaltend den Schritt des Einstellens eines Zustandes eines Vorhersagers, der die Vorhersagetastwerte erzeugt, auf null vor dem Beginn des Kodierens eines der Blöcke mit digitalen Tastwerten.

9. Verfahren nach Anspruch 7 oder 8, bei dem der verlustlose Kodierschritt durch Quantisierungsindizes der erzeugten Vorhersagetastwerte bedingt wird.

10. Verfahren nach einem der Ansprüche 1 bis 9, bei dem das Kodieren ausgeführt wird durch einen Mehrfachbeschreibungskodierer, der jeden Block der Blöcke digitaler Tastwerte mittels mehrerer Blockbeschreibungen kodiert, indem die Schritte des Kodierverfahrens einzeln für jede erzeugte Blockbeschreibung ausgeführt werden.

11. Verfahren nach Anspruch 10, enthaltend den zusätzlichen Schritt des Sendens für jeden Block der Blöcke digitaler Tastwerte wenigstens zweier unterschiedlicher Blockbeschreibungen in entsprechenden Datenpaketen mit einem vorbestimmten Zeitintervall zwischen den Paketen.

12. Verfahren nach Anspruch 11, enthaltend das Gruppieren einer entsprechenden Blockbeschreibung von wenigstens zwei unterschiedlichen Blöcken digitaler Tastwerte zusammen für die Sendung in ein und demselben Datenpaket.

13. Verfahren nach einem der Ansprüche 10 bis 12, bei dem das digitale Signal ein digitalisiertes Tonsignal ist und die Blöcke digitaler Tastwerte Tonsegmente sind, und wobei das Kodierverfahren in dem Mehrfachbeschreibungskodierer einen Anfangsschritt enthält, umfassend Transkodieren eines durch n-Bit PCM dargestellten digitalisierten Tonsignals in wenigstens zwei Darstellungen einschließt, die durch weniger als n-Bits jeweils dargestellt werden, und mit entsprechenden Sätzen von Quantisierungspegeln für die Segmentbeschreibungen der Tonsegmente des digitalisierten Tonsignals.

14. Verfahren nach einem der Ansprüche 1 bis 12, bei dem das digitale Signal ein digitalisiertes Tonsignal ist und die Blöcke digitaler Tastwerte Tonsegmente sind.

15. Verfahren zum Kodieren eines digitalen Signals und seiner Blöcke digitaler Tastwerte, die von einem Paket-geschalteten Netz empfangen werden, enthaltend die Schritte:
Erzeugen von Vorhersagetastwerten als Festpunkt- oder Gleitpunkt-Darstellungen auf der Grundlage früherer, quantisierter digitaler Tastwerte des digitalen Signals, das von einer verlustlosen Kodierung von empfangenen Kodewörtern resultiert;
verlustloses Dekodieren empfangener Kodewörter, die durch die Festpunkt- oder Gleitpunkt-Darstellungen der erzeugten Vorhersagetastwerte bedingt sind; und
Entquantisieren quantisierter digitaler Tastwerte, die von dem verlustlosen Dekodierschritt stammen, in binäre Darstellungen der digitalen Tastwerte des digitalen Signals.

16. Verfahren nach Anspruch 15, bei dem das verlustlose Dekodieren der empfangenen Kodewörter auf Tabellennachschlag basiert.

17. Verfahren nach Anspruch 16, bei dem die empfangenen Kodewörter Wahrscheinlichkeitswerte darstellen, wobei zwei Wahrscheinlichkeitswerte mittels eines erzeugten Vorhersagewerts und einer Tabelle auf zwei Quantisierungsbereichsgrenzpegel eines entsprechenden quantisierten digitalen Tastwertes abgebildet werden, wobei die Pegel dazu benutzt werden, den entsprechenden quantisierten digitalen Tastwert durch Ausführung von Tabellennachschlag abzuleiten.

18. Verfahren nach Anspruch 15 oder 16, bei dem der verlustlose Dekodierschritt für einen spezifischen quantisierten digitalen Tastwert das Ausgeben eines spezifischen Quantisierungspegels enthält, der einem spezifischen Eintrag einer Tabelle mit Quantisierungspegeln entspricht, wobei der spezifische Eintrag mittels eines empfangenen Kodeworts ausgewählt wird, das dem spezifischen quantisierten digitalen Tastwert entspricht.

19. Verfahren nach Anspruch 18, bei dem die Tabelle mit Quantisierungspegeln unter mehreren Tabellen mit Quantisierungspegeln ausgewählt wird auf der Grundlage eines erzeugten Vorhersagetastwertes, der dem spezifischen quantisierten digitalen Tastwert entspricht.

20. Verfahren nach einem der Ansprüche 15 bis 19, bei dem dem Schritt des Erzeugens von Vorhersagetastwerten eine Entquantisierung der quantisierten digitalen Tastwerte vorangeht, die von dem verlustlosen Dekodierschritt stammen, um **dadurch** die Quantisierungswerte der quantisierten digitalen Tastwerte zu erreichen.

21. Verfahren nach einem der Ansprüche 15 bis 20, enthaltend den Schritt des Quantisierens der erzeugten Vorhersagetastwerte, wobei der verlustlose Dekodierschritt auf erzeugten Vorhersagetastwerten basiert, die Quantisierungspegel eines vorbestimmten Satzes Quantisierungspegel haben.

22. Verfahren nach einem der Ansprüche 15 bis 21, enthaltend den Schritt des Einstellens eines Zustandes eines Vorhersagers, der die Vorhersagetastwerte erzeugt, auf null vor dem Beginn des Dekodierens eines der Blöcke mit digitalen Tastwerten.

23. Verfahren nach Anspruch 21 oder 22, bei dem der verlustlose Dekodierschritt durch die Quantisierungsindizes der erzeugten Vorhersagetastwerte bedingt ist.

24. Verfahren nach einem der Ansprüche 15 bis 23, bei dem das Dekodieren durch einen Mehrfachbeschreibungsdekodierer ausgeführt wird, der jeden Block der Blöcke digitaler Tastwerte auf der Grundlage wenigstens zweier unterschiedlicher empfangener Blockbeschreibungen dekodiert durch Ausführen der Schritte des Dekodierverfahrens, die dem Entquantisierungsschritt vorangehen, einzeln für jede empfangene Blockbeschreibung.

25. Verfahren nach einem der Ansprüche 15 bis 24, umfassend die Schritte:
Warten über eine vorbestimmte Zeitdauer auf den Empfang von wenigstens zwei unterschiedlichen Paketen, die unterschiedliche Blockbeschreibungen von ein und demselben Block digitaler Tastwerte enthalten;
Ausführen der Schritte des Dekodierverfahrens, das dem Entquantisierungsschritt vorausgeht, in Bezug auf jene eine oder mehreren unterschiedlichen Blockbeschreibungen des Blocks digitaler Tastwerte, die in der vorbestimmten Zeitperiode empfangen wurden; und
Entquantisieren der einen oder einer Verschmelzung der mehreren Blockbeschreibungen.

26. Verfahren nach Anspruch 25, bei dem jedes empfangene Paket mehrere Blockbeschreibungen mehrerer unterschiedlicher Blöcke digitaler Tastwerte enthält, die zusammen gruppiert sind, wobei das Verfahren den Schritt des Teilens aufeinanderfolgend verteilter Pakete bezüglich der enthaltenen Blockbeschreibungen enthält, um **dadurch** mehrere unterschiedliche Blockbeschreibungen für jeden Block zu dekodierender digitaler Tastwerte zu erhalten.

27. Verfahren nach einem der Ansprüche 25 bis 26, bei dem das digitale Signal ein digitalisiertes Tonsignal ist und die Blöcke digitaler Tastwerte Tonsegmente sind, und wobei das digitalisierte Tonsignal ein PCM-kodierter Bitstrom ist, und wobei jede Verschmelzung des Entquantisierungsschritts das Transkodieren wenigstens zweier Segmentdarstellungen umfasst, die jeweils durch weniger als n Bits dargestellt sind, in eine einzelne n-Bit-PCM-Darstellung des einen und gleichen Tonsignalsegments.

28. Verfahren nach einem der Ansprüche 15 bis 26, bei dem das digitale Signal ein digitalisiertes Tonsignal ist und die Blöcke digitaler Tastwerte Tonsegmente sind.

29. Rechnerlesbares Medium mit durch einen Rechner ausführbaren Befehlen zum Ausführen eines jeden der Schritte des Verfahrens, wie in einem der Ansprüche 1 bis 14 beansprucht, wenn auf einem Rechner ausgeführt.

30. Rechnerlesbares Medium mit durch einen Rechner ausführbaren Befehlen zum Ausführen eines jeder der Schritte des Verfahrens nach einem der Ansprüche 15 bis 28, wenn auf einem Rechner ausgeführt.

## Revendications

1. Procédé de codage d'un signal numérique et de ses blocs d'échantillons numériques en vue d'une transmission sur un réseau à commutation de paquets, le procédé comprenant les étapes consistant à :
quantifier les représentations binaires des échantillons numériques selon des représentations plus approximatives des échantillons numériques ;
générer des échantillons de prédiction en tant que représentations de point fixe ou de point flottant sur la base des échantillons numériques quantifiés précédents de ladite étape de quantification ; et
coder sans perte les échantillons numériques quantifiés conditionnés sur les représentations de point fixe ou de point flottant des échantillons de prédiction générés.

2. Procédé selon la revendication 1, dans lequel le codage sans perte des échantillons numériques quantifiés est basé sur des consultations de tables.

3. Procédé selon la revendication 2, dans lequel les consultations de tables sont effectuées à l'aide d'un échantillon numérique quantifié afin de générer deux niveaux de limite de zone de quantification correspondant à l'échantillon numérique quantifié, dans lequel les niveaux, à l'aide de la valeur de prédiction commune générée et d'une autre table, sont mappés par rapport à une paire de valeurs de probabilité qui sont utilisées pour le codage sans perte de l'échantillon numérique quantifié.

4. Procédé selon la revendication 1 ou 2, dans lequel ladite étape de codage sans perte destinée à un échantillon numérique quantifié spécifique comprend la sortie d'un mot de code spécifique qui correspond à une entrée spécifique d'une table avec des mots de code, ladite entrée spécifique étant dérivée à l'aide de l'échantillon de prédiction généré correspondant audit échantillon numérique quantifié spécifique.

5. Procédé selon la revendication 4, dans lequel ladite table avec les mots de code est choisie parmi plusieurs tables avec des mots de code sur la base dudit échantillon de prédiction généré, dans lequel ladite entrée spécifique est dérivée comme l'entrée correspondant audit index de quantification dudit échantillon numérique quantifié.

6. Procédé selon l'une quelconque des revendications 1 à 5, dans lequel ladite étape de génération d'échantillons de prédiction est précédée d'une dé-quantification des échantillons numériques quantifiés, fournissant ainsi les valeurs de quantification desdits échantillons numériques quantifiés.

7. Procédé selon l'une quelconque des revendications 1 à 6, comprenant l'étape de quantification des échantillons de prédiction générés, dans lequel ladite étape de codage sans perte est basée sur des échantillons de prédiction générés possédant des niveaux de quantification d'un ensemble prédéfini de niveaux de quantification.

8. Procédé selon l'une quelconque des revendications 1 à 7, comprenant l'étape de définition d'un état d'un prédicteur générant lesdits échantillons de prédiction comme étant nul avant de commencer à coder l'un desdits blocs avec des échantillons numériques.

9. Procédé selon la revendication 7 ou 8, dans lequel ladite étape de codage sans perte est conditionnée sur les index de quantification desdits échantillons de prédiction générés.

10. Procédé selon l'une quelconque des revendications 1 à 9, dans lequel ledit codage est effectué par un encodeur à descriptions multiples, ledit encodeur à description multiples codant chaque bloc desdits blocs d'échantillons numériques à l'aide des descriptions de blocs multiples en effectuant les étapes du procédé de codage individuellement pour chaque description de bloc générée.

11. Procédé selon la revendication 10, comprenant l'étape supplémentaire de transmission, pour chaque bloc desdits blocs d'échantillons numériques, d'au moins deux descriptions de blocs différentes dans des paquets de données respectifs avec un intervalle de temps prédéfini entre les paquets.

12. Procédé selon la revendication 11, comprenant le groupage d'une description de bloc respective d'au moins deux blocs différents d'échantillons numériques en vue d'une transmission dans un seul et même paquet.

13. Procédé selon l'une quelconque des revendications 10 à 12, dans lequel ledit signal numérique est un signal sonore numérisé et lesdits blocs d'échantillons numériques sont des segments sonores, et dans lequel le procédé de codage dudit encodeur à descriptions multiples comprend une étape initiale de transcodage d'un signal sonore numérisé représenté par un PCM de n bit en au moins deux représentations représentées par moins de n bits chacune, et avec des ensembles respectifs de niveaux de quantification pour les descriptions de segments des segments sonores dudit signal sonore numérisé.

14. Procédé selon l'une quelconque des revendications 1 à 12, dans lequel ledit signal numérique est un signal sonore numérisé et lesdits blocs d'échantillons numériques sont des segments sonores.

15. Procédé de décodage d'un signal numérique et de ses blocs d'échantillons numériques reçus de la part d'un réseau à commutation de paquets, le procédé comprenant les étapes consistant à :
générer des échantillons de prédiction en tant que représentations de point fixe ou de point flottant sur la base des échantillons numériques quantifiés précédents dudit signal numérique résultant d'un décodage sans perte de mots de code reçus ;
décoder sans perte des mots de code reçus conditionnés sur les représentations de point fixe ou de point flottant des échantillons de prédiction générés ; et
dé-quantifier les échantillons numériques quantifiés résultant de l'étape de décodage sans perte, en représentations binaires des échantillons numériques dudit signal numérique.

16. Procédé selon la revendication 15, dans lequel le décodage sans perte des mots de code reçus est basé sur des consultations de tables.

17. Procédé selon la revendication 16, dans lequel les mots de code reçus représentent des valeurs de probabilité, où deux valeurs de probabilité, à l'aide d'une valeur de prédiction générée et d'une table, sont mappées par rapport à deux niveaux de limite de zone de quantification d'un échantillon numérique quantifié correspondant, lesdits niveaux étant utilisés pour dériver l'échantillon numérique quantifié correspondant en effectuant des consultations de tables.

18. Procédé selon la revendication 15 ou 16, dans lequel ladite étape de décodage sans perte destinée à un échantillon numérique quantifié spécifique comprend la sortie d'un niveau de quantification spécifique qui correspond à une entrée spécifique d'une table avec des niveaux de quantification, ladite entrée spécifique étant sélectionnée à l'aide d'un mot de code reçu correspondant audit échantillon numérique quantifié spécifique.

19. Procédé selon la revendication 18, dans lequel ladite table avec des niveaux de quantification est choisie parmi plusieurs tables avec des niveaux de quantification, sur la base d'un échantillon de prédiction généré correspondant audit échantillon numérique quantifié spécifique.

20. Procédé selon l'une quelconque des revendications 15 à 19, dans lequel ladite étape de génération d'échantillons de prédiction est précédée d'une dé-quantification des échantillons numériques quantifiés résultant de l'étape de décodage sans perte, fournissant ainsi les valeurs de quantification desdits échantillons numériques quantifiés.

21. Procédé selon l'une quelconque des revendications 15 à 20, comprenant l'étape de quantification des échantillons de prédiction générés, dans lequel ladite étape de décodage sans perte est basée sur des échantillons de prédiction générés possédant des niveaux de quantification d'un ensemble prédéfini de niveaux de quantification.

22. Procédé selon l'une quelconque des revendications 15 à 21, comprenant l'étape de définition d'un état d'un prédicteur générant lesdits échantillons de prédiction comme étant nul avant de commencer à décoder l'un desdits blocs avec des échantillons numériques.

23. Procédé selon la revendication 21 ou 22, dans lequel ladite étape de décodage sans perte est conditionnée sur les index de quantification desdits échantillons de prédiction générés.

24. Procédé selon l'une quelconque des revendications 15 à 23, dans lequel ledit décodage est effectué par un décodeur à descriptions multiples, ledit décodeur à descriptions multiples décodant chaque bloc desdits blocs d'échantillons numériques sur la base d'au moins deux descriptions de blocs reçues différentes, en effectuant les étapes du procédé de décodage précédant l'étape de dé-quantification de manière individuelle pour chaque description de bloc reçue.

25. Procédé selon l'une quelconque des revendications 15 à 24, comprenant les étapes consistant à :
attendre une période de temps prédéfmie en vue de la réception d'au moins deux paquets différents comprenant des descriptions de blocs différentes d'un seul et même bloc d'échantillons numériques ;
réaliser les étapes du procédé de décodage précédant l'étape de dé-quantification par rapport aux descriptions de blocs différentes, uniques ou multiples, dudit bloc d'échantillons numériques reçu dans ladite période de temps prédéfinie ; et
dé-quantifier la description de bloc ou un ensemble de plusieurs descriptions de blocs.

26. Procédé selon la revendication 25, dans lequel chaque paquet reçu comprend plusieurs descriptions de blocs de plusieurs blocs différents d'échantillons numériques regroupés, le procédé comprenant l'étape de division de paquets reçus de manière successive par rapport aux descriptions de blocs incluses, fournissant ainsi plusieurs descriptions de blocs différentes pour chaque bloc d'échantillons numériques à décoder.

27. Procédé selon l'une quelconque des revendications 25 à 26, dans lequel ledit signal numérique est un signal sonore numérisé et lesdits blocs d'échantillons numériques sont des segments sonores, et dans lequel ledit signal sonore numérisé est un flux binaire encodé PCM, et dans lequel tout regroupement de ladite étape de dé-quantification implique un transcodage d'au moins deux représentations de segments, représentée chacune par moins de n bits, en une seule représentation PCM de n bit dudit et unique segment de signal sonore.

28. Procédé selon l'une quelconque des revendications 15 à 26, dans lequel ledit signal numérique est un signal sonore numérisé et lesdits blocs d'échantillons numériques sont des segments sonores.

29. Support informatique possédant des instructions exécutables par un ordinateur pour réaliser chacune des étapes du procédé selon l'une quelconque des revendications 1 à 14 lorsqu'il est exécuté sur un ordinateur.

30. Support informatique possédant des instructions exécutables par un ordinateur afin de réaliser chacune des étapes du procédé selon l'une quelconque des revendications 15 à 28 lorsqu'il est exécuté sur un ordinateur.
